# EUROPÄISCHE PATENTANMELDUNG

(11) **EP 1 724 651 A1**
(43) Veröffentlichungstag der Anmeldung: **22.11.2006**
(21) Anmeldenummer: 05010538.6
(22) Anmeldetag: 13.05.2005
(51) Int. Cl.: G05B 19/4065, G05B 19/418

(54) **Präventive Diagnostik von Automatisierungskomponenten**

(71) Anmelder: SIEMENS AKTIENGESELLSCHAFT, 80333 München (DE)
(72) Erfinder: Gerber, Patrick, 91074 Herzogenaurach (DE); Rath, Günter, 91085 Weisendorf (DE); Witte, Karl-Hermann, 91054 Buckenhof (DE)

(57) **Zusammenfassung**

Die Erfindung betrifft ein Verfahren und eine Vorrichtung zur Zustandsüberwachung mindestens eines Produktionsmittels (1) eines Automatisierungssystems. Um die Ausfallzeiten des Automatisierungssystems durch präventive Diagnose von Komponenten des Automatisierungssystems zu reduzieren, werden folgende Verfahrensschritte vorgeschlagen:
- Protokollieren einer Produktionsschrittdauer, die von dem Produktionsmittel (1) zur Durchführung eines Produktionsschrittes benötigt wird, wobei Werte (T₁, T₂) für die Produktionsschrittdauer während einer Lernphase (2) gesammelt werden, innerhalb derer ein fehlerfreier Zustand des Produktionsmittels (1) vorausgesetzt wird,
- Bestimmen mindestens eines ersten Schwellwertes auf Basis der gesammelten Werte (T₁,T₂) der Produktionsschrittdauer,
- Messen eines aktuellen Wertes (Tᵢ) der Produktionsschrittdauer während einer an die Lernphase (2) anschließenden Produktionsphase (3),
- Vergleichen des aktuellen Wertes (Tᵢ) der Produktionsschrittdauer mit dem ersten Schwellwert und
- Generieren einer Fehlermeldung (ALARM_1) nach einem einfachen oder mehrfachen Über- oder Unterschreiten des ersten Schwellwertes.

## Beschreibung

Die Erfindung betrifft ein Verfahren und eine Vorrichtung zur Zustandsüberwachung eines Produktionsmittels eines Automatisierungssystems und ein Automatisierungssystem mit einer derartigen Vorrichtung.

Eine derartige Vorrichtung bzw. ein derartiges Verfahren kommt beispielsweise in automatisierten Fertigungsanlagen zum Einsatz, bei denen ein Produkt durch mehrere sequentiell ablaufende automatisierte Produktionsschritte gefertigt wird.

Bei einer automatisierten Fertigung und/oder Montage eines Produktes werden verschiedene Produktionsmittel wie Roboter, Förderbänder, Diagnosevorrichtungen etc. eingesetzt. Insbesondere mechanische Komponenten derartiger Produktionsmittel sind in der Regel verschleißbehaftet. Im Laufe des Betriebes wird durch den Verschleiß eines Produktionsmittels zunächst eine Veränderung der Produktionsgeschwindigkeit verursacht. Wird der Verschleiß nicht rechtzeitig erkannt, kommt es zum Ausfall des Produktionsmittels und somit zu einer Unterbrechung der Fertigung.

Automatisierte Fertigungs- oder Produktionsprozesse werden im Allgemeinen mit Hilfe spezieller Programmiertools in Form einer Ablaufsteuerung projektiert. Häufig werden hierbei von den Produktionsmitteln auszuführende Produktionsschritte in einer sequentiell abzuarbeitende Schrittkette programmiert. Ein Beispiel für ein hierfür geeignetes Programmiertool ist S7 GRAPH. Mit diesem Programm können darüber hinaus auch die Zeiten erfasst werden, die zur Durchführung eines Schrittes der Schrittkette benötigt werden, ohne dass dies von einem Anwender extra projektiert werden muss.

Der Erfindung liegt die Aufgabe zu Grunde, die Ausfallzeiten eines Automatisierungssystems durch präventive Diagnose von Komponenten des Automatisierungssystems zu reduzieren.

Diese Aufgabe wird durch ein Verfahren zur Zustandsüberwachung eines Produktionsmittels eines Automatisierungssystems mit folgenden Verfahrenschritten gelöst:
- Protokollieren einer Produktionsschrittdauer, die von dem Produktionsmittel zur Durchführung eines Produktionsschrittes benötigt wird, wobei Werte für die Produktionsschrittdauer während einer Lernphase gesammelt werden, innerhalb derer ein fehlerfreier Zustand des Produktionsmittels vorausgesetzt wird,
- Bestimmen mindestens eines ersten Schwellwertes auf Basis der gesammelten Werte der Produktionsschrittdauer,
- Messen eines aktuellen Wertes der Produktionsschrittdauer während einer an die Lernphase anschließenden Produktionsphase,
- Vergleichen des aktuellen Wertes der Produktionsschrittdauer mit dem ersten Schwellwert und
- Generieren einer Fehlermeldung nach einem einfachen oder mehrfachen Über- oder Unterschreiten des ersten Schwellwertes.

Ferner wird die Aufgabe durch eine Vorrichtung zur Zustandsüberwachung mindestens eines Produktionsmittels eines Automatisierungssystems gelöst mit
- einem Speicher zum Speichern von Werten für eine Produktionsschrittdauer, die während einer Lernphase gesammelt werden, innerhalb derer ein fehlerfreier Zustand des Produktionsmittels vorausgesetzt wird,
- einer ersten Verarbeitungseinheit zur Bestimmung mindestens eines ersten Schwellwertes auf Basis der im Speicher gesammelten Werte der Produktionsschrittdauer,
- einer Messvorrichtung zum Messen eines aktuellen Wertes der Produktionsschrittdauer während einer an die Lernphase anschließenden Produktionsphase und
- einer zweiten Verarbeitungseinheit zum Vergleich des aktuellen Wertes der Produktionsschrittdauer mit dem ersten Schwellwert und Generieren einer Fehlermeldung nach einem einfachen oder mehrfachen Über- oder Unterschreiten des ersten Schwellwertes.

Weiterhin wird die Aufgabe durch ein Automatisierungssystem mit einer derartigen Vorrichtung gelöst.

Unter dem Begriff Automatisierungssystem ist hier sowie im gesamten Dokument ein System zu verstehen, welches mit Hilfe technischer Mittel bestimmte Operationen ohne Einflussnahme des Menschen teilweise oder ganz nach vorgegebenen Programmen durchführt. Operationen bezeichnen in diesem Zusammenhang z. B Fertigungsprozesse, Monatageprozesse, Transportprozesse, Prozesse zur Qualitätskontrolle etc., die insbesondere im industriellen Umfeld ablaufen.

Der Erfindung liegt die Erkenntnis zugrunde, dass sich ein Ausfall eines Produktionsmittels des Automatisierungssystems im Vorfeld bereits durch eine Änderung der Produktionsgeschwindigkeit des Produktionsmittels ankündigt. Grundgedanke der Erfindung ist es daher, die Produktionsschrittdauer, die von dem Produktionsmittel zur Durchführung eines Produktionsschrittes benötigt wird, zu überwachen. Hierzu wird zunächst in der Lernphase die Produktionsschrittdauer gemessen. Die Lernphase zeichnet sich dadurch aus, dass ein fehlerfreier Zustand des Produktionsmittels vorausgesetzt werden kann. Es kann sich hierbei beispielsweise um die Zeit unmittelbar nach der Inbetriebnahme des Automatisierungssystems handeln. Die verschiedenen, während der Lernphase protokollierten Werte für die Produktionsschrittdauer werden in einem Speicher abgelegt. Anhand dieser Werte, die den fehlerfreien Zustand der Produktionsmittel kennzeichnen, wird anschließend ein erster Schwellwert bestimmt. Dieser erste Schwellwert dient als Schranke für die Produktionsschrittdauer im anschließenden laufenden Produktionsbetrieb. Hierbei kann es sich sowohl um eine obere als auch um eine untere Schranke handeln. Im laufenden Produktionsbetrieb werden die kontinuierlich ermittelten aktuellen Werte der Produktionsschrittdauer mit dieser Schranke verglichen. Wird die Schranke bzw. der erste Schwellwert unter- oder überschritten, so kann eine Fehlermeldung ausgelöst werden, die einen Anwender des Automatisierungssystems auf einen möglichen Ausfall des entsprechenden Produktionsmittels hinweist.

Das Auslösen der Fehlermeldung geschieht nicht zwangsläufig direkt bei einem einmaligen Über- oder Unterschreiten des Schwellwertes durch den aktuellen Wert der Produktionsschrittdauer. Vielmehr kann es sinnvoll sein, das Über- oder Unterschreiten des ersten Schwellwertes zu protokollieren und erst ab einer gewissen Anzahl von Über- oder Unterschreitungen des Schwellwertes die Fehlermeldung auszulösen. Hierdurch wird sichergestellt, dass bei einer einmaligen, nicht repräsentativen Abweichung der Produktionsschrittdauer keine Fehlermeldung ausgelöst wird.

Vorteilhafter Weise ist das Verfahren zur Zustandsüberwachung eines verschleißbehafteten Bauteils vorgesehen. Durch Verschleiß von Bauteilen bzw. durch eine veränderte Schmierung etc. ändert sich die Produktionsgeschwindigkeit, was als Anzeichen für einen möglichen bevorstehenden Ausfall des Bauteils interpretiert werden kann. Durch die Überwachung der Produktionsgeschwindigkeit kann somit ein solcher Verschleiß des Bauteils bzw. dessen Ausfall prognostiziert werden, so dass das Bauteil rechtzeitig innerhalb des Automatisierungssystems ersetzt werden kann. Ein kompletter Produktionsausfall kann auf diese Art und Weise vermieden werden.

In einer vorteilhaften Ausführungsform der Erfindung wird eine mittlere Produktionsschrittdauer auf Basis der während der Lernphase gesammelten Werte bestimmt. Die mittlere Produktionsdauer kann als Basis zur Bestimmung des ersten Schwellwertes dienen. Beispielsweise kann sich der erste Schwellwert, sofern er eine obere Schranke darstellt, durch den zweifachen Maximalwert der innerhalb der Lernphase ermittelten Produktionsschrittdauer abzüglich der mittleren Produktionsschrittdauer ergeben.

Weiterhin kann es zweckmäßig sein, mehr als einen Schwellwert für die Zustandsüberwachung des Produktionsmittels einzuführen. So ist es vorteilhaft, einen zweiten Schwellwert auf Basis der während der Lernphase gesammelten Werte zu bestimmen, dessen Abweichung von der mittleren Produktionsschrittdauer geringer als die des ersten Schwellwertes ist. Insbesondere in einem solchen Fall, kann eine Warnmeldung nach einem einfachen oder mehrfachen Über- oder Unterschreiten des zweiten Schwellwertes generiert werden. Auf diese Art und Weise wird einem Anwender des Automatisierungssystems zunächst durch die Warnmeldung suggeriert, dass die Produktionsschrittdauer des Produktionsmittels den innerhalb der Lernphase festgestellten Normbereichs verlässt, ohne jedoch bereits einen kritischen Wert angenommen zu haben. Erst bei Über- oder Unterschreiten des ersten Schwellwertes, würde der Anwender in einem solchen Anwendungsfall aufgefordert, dass Produktionsmittel zu überprüfen oder auszutauschen.

Insbesondere dann, wenn nicht schon nach einem einmaligen Über- oder Unterschreiten des ersten oder zweiten Schwellwertes eine Fehler- bzw. Warnmeldung ausgelöst werden soll, ist es zweckmäßig, den aktuellen Wert der Produktionsschrittdauer während der Produktionsphase in einem Speicher zu protokollieren. Erst ab einer gewissen Anzahl von Über- oder Unterschreitungen wird eine entsprechende Fehler- oder Warnmeldung ausgelöst.

Das Überprüfen der Produktionsschrittdauer in der Lern- und in der Produktionsphase ist besonders einfach durchzuführen, wenn die Produktionsschrittdauer durch Bestimmung einer Aktivierungszeit eines Schrittes einer als Schrittkette programmierten Ablaufsteuerung ermittelt wird. Programmiertools wie beispielsweise S7 GRAPH bieten dem Anwender die Möglichkeit, die Zeit für die einzelnen Produktionsschritte zu messen ohne dass der Anwender dies extra projektieren muss.

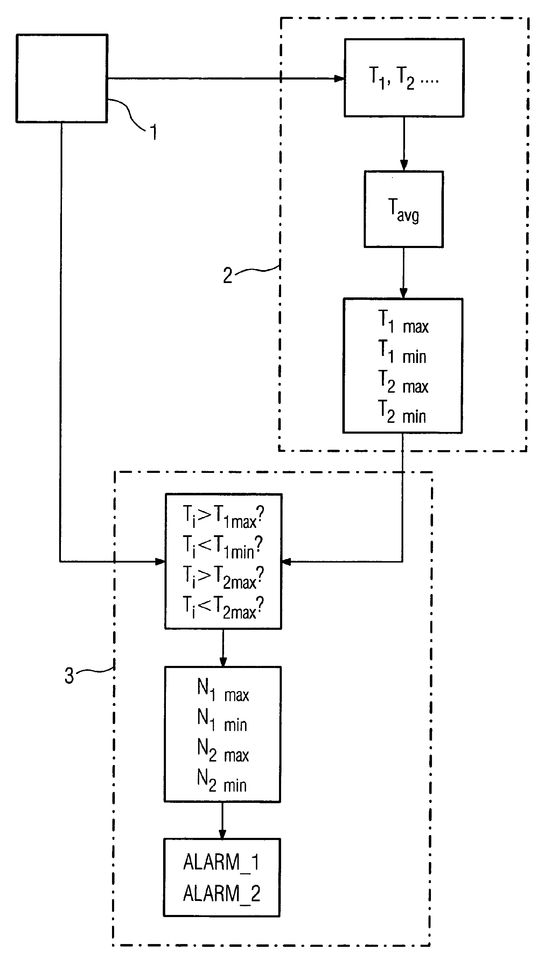

Im Folgenden wird die Erfindung anhand des in der Figur dargestellten Ausführungsbeispiels näher beschrieben und erläutert.

Die Figur zeigt eine Ausführungsform des erfindungsgemäßen Verfahrens zur Zustandsüberwachung eines Produktionsmittels 1 eines Automatisierungssystems.

Bei dem Produktionsmittel 1 handelt es sich beispielsweise um einen Bestückungsroboter innerhalb einer Fertigungsstraße. Der Bestückungsroboter 1 ist somit Teil eines Automatisierungssystems und benötigt eine gewisse Produktionsschrittdauer für den von ihm durchzuführenden Produktionsschritt innerhalb des Fertigungsprozesses. Während einer Lernphase 2 werden Werte T₁,T_{2...} für diese Produktionsschrittdauer protokolliert. Diese Werte werden in einem Speicher abgelegt. Bei der Lernphase kann es sich beispielsweise um einen Zeitraum handeln, der unmittelbar nach der Inbetriebnahme des Bestückungsroboters 1 abläuft.

Von den gesammelten Werten T₁,T_{2...} während der Lernphase 2 wird ein Mittelwert T_{avg} berechnet. Dieser Mittelwert T_{avg} dient wiederum als Basis zur Berechnung eines ersten oberen Schwellwertes T₁ₘₐₓ, eines ersten unteren Schwellwertes T₁ₘᵢₙ, eines zweiten oberen Schwellwertes T₂ₘₐₓ und eines zweiten unteren Schwellwertes T₂ₘᵢₙ. Im Anschluss an die Lernphase 2 stehen diese Schwellwerte zur Überwachung des laufenden Produktionsprozesses zur Verfügung.

Innerhalb einer an die Lernphase 2 anschließenden Produktionsphase 3 wird kontinuierlich ein aktueller Wert Tᵢ der Produktionsschrittdauer des Produktionsmittels 1 des Automatisierungssystems überwacht. Hierbei wird nach jedem Produktionsschritt der zugehörige aktuelle Wert Tᵢ der Produktionsschrittdauer hinsichtlich etwaiger Über- oder Unterschreitungen der Schwellwerte T₁ₘₐₓ, T₁ₘᵢₙ, T₂ₘₐₓ, T₂ₘᵢₙ überprüft. Für jede Über- oder Unterschreitung eines der Schwellwerte wird ein entsprechender Zähler hochgesetzt. Beispielsweise bezeichnet eine Zählvariable N₁ₘₐₓ die Anzahl der Überschreitungen des ersten oberen Schwellwert T₁ₘₐₓ durch den aktuellen Wert Tᵢ. Die Zählvariable N₁ₘᵢₙ bezeichnet die Anzahl der Unterschreitung des unteren ersten Schwellwertes T₁ₘᵢₙ durch den aktuellen Wert Tᵢ. Wird nur der zweite obere Schwellwert T₂ₘₐₓ von dem aktuellen Wert Tᵢ der Produktionsschrittdauer überschritten, so wird eine Zählvariable N₂ₘₐₓ hochgesetzt. Analog wird eine Zählvariable N₂ₘᵢₙ hochgesetzt, sobald der aktuelle Werte Tᵢ der Produktionsschrittdauer den zweiten unteren Schwellwert T₂ₘᵢₙ unterschreitet.

Ab einer gewissen Anzahl von Über- oder Unterschreitung des ersten bzw. zweiten oberen oder unteren Schwellwertes werden Meldungen ausgegeben. So wird bei einer mehrfachen Überschreitung des ersten oberen Schwellwertes T₁ₘₐₓ eine Alarmmeldung ALARM_1 ausgegeben, während bei einer mehrfachen Überschreitung des zweiten oberen Schwellwertes T₂ₘₐₓ die Warnmeldung ALARM_2 ausgegeben wird. Analog wird bei einer mehrfachen Unterschreitung des ersten unteren Schwellwertes T₁ₘᵢₙ eine Alarmmeldung ALARM_1 ausgegeben, während bei einer mehrfachen Unterschreitung des zweiten unteren Schwellwertes T₂ₘᵢₙ die Warnmeldung ALARM_2 ausgegeben wird. Die Warnmeldung ALARM_2 dient als eine Art Vorwarnung, während die Fehlermeldung ALARM_1 den Anwender direkt auf einen kritischen Betriebsfall des Produktionsmittels 1 aufmerksam machen soll. Dies ist zweckmäßig, da der zweite obere Schwellwert T₂ₘₐₓ und der zweite untere Schwellwert T₂ₘᵢₙ näher an der mittleren Produktionsschrittdauer T_{avg} als der erste obere Schwellwert T₁ₘₐₓ und der erste untere Schwellwert T₁ₘᵢₙ liegen.

## Patentansprüche

1. Verfahren zur Zustandsüberwachung eines Produktionsmittels
(1) eines Automatisierungssystems mit folgenden Verfahrenschritten:
- Protokollieren einer Produktionsschrittdauer, die von dem Produktionsmittel (1) zur Durchführung eines Produktionsschrittes benötigt wird, wobei Werte (T₁,T₂) für die Produktionsschrittdauer während einer Lernphase (2) gesammelt werden, innerhalb derer ein fehlerfreier Zustand des Produktionsmittels (1) vorausgesetzt wird,
- Bestimmen mindestens eines ersten Schwellwertes auf Basis der gesammelten Werte (T₁,T₂) der Produktionsschrittdauer,
- Messen eines aktuellen Wertes (Tᵢ) der Produktionsschrittdauer während einer an die Lernphase (2) anschließenden Produktionsphase (3),
- Vergleichen des aktuellen Wertes (Tᵢ) der Produktionsschrittdauer mit dem ersten Schwellwert und
- Generieren einer Fehlermeldung (ALARM_1) nach einem einfachen oder mehrfachen Über- oder Unterschreiten des ersten Schwellwertes.

2. Verfahren nach Anspruch 1,
wobei das Verfahren zur Zustandsüberwachung eines verschleißbehafteten Bauteils vorgesehen ist.

3. Verfahren nach Anspruch 1 oder 2,
wobei eine mittlere Produktionsschrittdauer (T_{avg}) auf Basis der während der Lernphase gesammelten Werte bestimmt wird.

4. Verfahren nach Anspruch 3,
wobei ein zweiter Schwellwert auf Basis der während der Lernphase gesammelten Werte (T₁,T₂) bestimmt wird, dessen Abweichung von der mittleren Produktionsschrittdauer (T_{avg}) geringer als die des ersten Schwellwertes ist.

5. Verfahren nach Anspruch 4,
wobei eine Warnmeldung (ALARM_2) nach einem einfachen oder mehrfachen Über- oder Unterschreiten des zweiten Schwellwertes generiert wird.

6. Verfahren nach einem der vorhergehenden Ansprüche,
wobei der aktuelle Wert (Tᵢ) der Produktionsschrittdauer während der Produktionsphase (2) protokolliert wird.

7. Verfahren nach einem der vorhergehenden Ansprüche,
wobei die Produktionsschrittdauer durch Bestimmung einer Aktivierungszeit eines Schrittes einer als Schrittkette programmierten Ablaufsteuerung ermittelt wird.

8. Vorrichtung zur Zustandsüberwachung mindestens eines Produktionsmittels (1) eines Automatisierungssystems mit
- einem Speicher zum Speichern von Werten (T₁,T₂) für eine Produktionsschrittdauer, die während einer Lernphase (2) gesammelt werden, innerhalb derer ein fehlerfreier Zustand des Produktionsmittels (1) vorausgesetzt wird,
- einer ersten Verarbeitungseinheit zur Bestimmung mindestens eines ersten Schwellwertes auf Basis der im Speicher gesammelten Werte (T₁,T₂) der Produktionsschrittdauer,
- einer Messvorrichtung zum Messen der Werte (T₁,T₂) für die Produktionsschrittdauer während der Lernphase und eines aktuellen Wertes (Tᵢ) der Produktionsschrittdauer während einer an die Lernphase (2) anschließenden Produktionsphase (3) und
- einer zweiten Verarbeitungseinheit zum Vergleich des aktuellen Wertes (Tᵢ) der Produktionsschrittdauer mit dem ersten Schwellwert und Generieren einer Fehlermeldung nach einem einfachen oder mehrfachen Über- oder Unterschreiten des ersten Schwellwertes.

9. Vorrichtung nach Anspruch 8,
wobei die Vorrichtung zur Zustandsüberwachung eines verschleißbehafteten Bauteils vorgesehen ist.

10. Vorrichtung nach Anspruch 8 oder 9,
wobei die erste Verarbeitungseinheit zur Bestimmung einer mittleren Produktionsschrittdauer (T_{avg}) auf Basis der während der Lernphase gesammelten Werte vorgesehen ist.

11. Vorrichtung nach Anspruch 10,
wobei die erste Verarbeitungseinheit zur Bestimmung eines zweiten Schwellwertes auf Basis der während der Lernphase gesammelten Werte (T₁,T₂) vorgesehen ist, dessen Abweichung von der mittleren Produktionsschrittdauer (T_{avg}) geringer als die des ersten Schwellwertes ist.

12. Vorrichtung nach Anspruch 11,
wobei die zweite Verarbeitungseinheit zum Generieren einer Warnmeldung (ALARM_2) nach einem einfachen oder mehrfachen Über- oder Unterschreiten des zweiten Schwellwertes vorgesehen ist.

13. Vorrichtung nach einem der Ansprüche 8 bis 12 mit einem weiteren Speicher zum Speichern des aktuellen Wertes (Tᵢ) der Produktionsschrittdauer während der Produktionsphase (2).

14. Vorrichtung nach einem der Ansprüche 8 bis 13,
wobei die Messvorrichtung zur Ermittlung der Produktionsschrittdauer durch Bestimmung einer Aktivierungszeit eines Schrittes einer als Schrittkette programmierten Ablaufsteuerung vorgesehen ist.

15. Automatisierungssystem mit einer Vorrichtung nach einem der Ansprüche 8. bis 14.
